# EUROPEAN PATENT APPLICATION

(11) **EP 3 138 710 A1**
(43) Date of publication of application: **08.03.2017**
(21) Application number: 16182545.0
(22) Date of filing: 03.08.2016
(51) Int. Cl.: B60H 1/00, F28F 17/00, F28D 1/04, F28D 1/053, F24F 13/22, B60H 1/32, F28D 21/00

(54) **INTEGRATED MODULE OF EVAPORATOR-CORE AND HEATER-CORE FOR AIR CONDITIONER**

(30) Priority: 03.08.2015 KR 20150109561
(71) Applicant: DongHwan Ind. Corp., Seoul (KR)
(72) Inventor: KO, Dong Hwan, Gyungsangnam-do (KR)
(74) Representative: Grünecker Patent- und Rechtsanwälte PartG mbB

(57) **Abstract**

The present invention relates to a heat exchanger that is disposed in an automotive air conditioner and provides cold air or hot air through heat exchange with air supplied by a fan and, more particularly, to an integrated module of an evaporator core and a heater core for an automotive air conditioner whereby the integrated module can simplify an automotive air conditioner by integrating an evaporator for cooling and a heater core for heating in the automotive air conditioner. According to the present invention, evaporator headers (100) and heater headers (300) are stacked and fixed in an integrated unit, so it is possible to simplify a facility. Accordingly, installation is easy and a volume can be reduced, as compared with the related art, whereby it is possible to reduce the weight of a vehicle.

## Description

### BACKGROUND OF THE INVENTION

### Field of the Invention

The present invention relates to an automotive heat exchanger and, more particularly, to an integrated module of an evaporator core and a heater core for an automotive air conditioner whereby the integrated module can simplify an automotive air conditioner by integrating an evaporator for cooling and a heater core for heating in the automotive air conditioner.

### Description of the Related Art

In general, vehicles are equipped with an air-conditioning system for supplying fresh air into the interior, which is contaminated by the breath of passengers, the external atmospheric state, and a change in temperature of the external air, and for maintaining a pleasant internal environment by keeping the interior temperature at a level suitable for the bodies of passengers.

These air-conditioning systems supply hot air by sending cooling water heated by an engine through a heater core to exchange heat with air from a fan in a heating process and supply cold air by cooling air from the fan through an evaporator included in a cooling cycle using a coolant in a process of cooling.

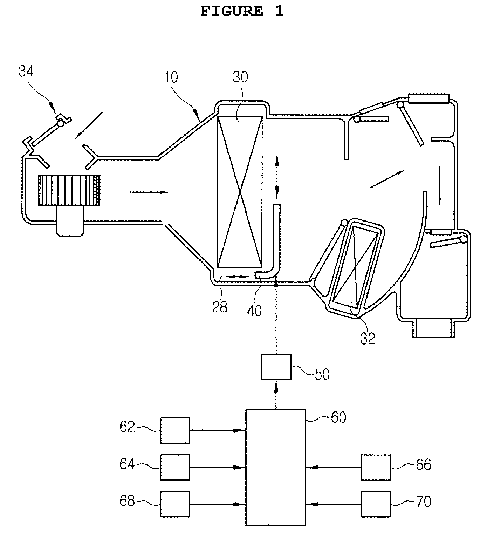

However, in a common automotive air-conditioning system, as shown in FIG. 1, an evaporator 30 and a heater core 32 are separated, so installation spaces and installation structures such as brackets for separately installing them are required.

Further, structures for installing an evaporator and a heater are spaced from each other and complicated in existing air-conditioning systems, so it is required to ensure an installation space including an engine room of a vehicle, whereby the entire volume and weight of the vehicle are increased.

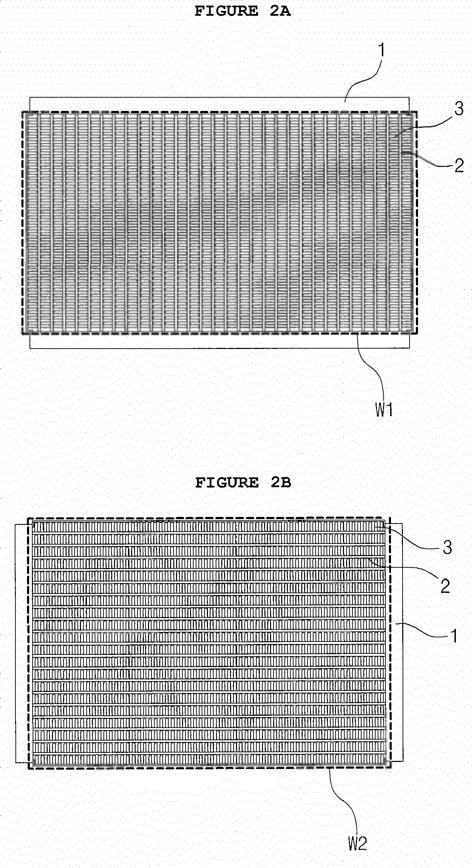

In general, a heat exchanger such as a common evaporator or a heater core, as shown in FIGS. 2A and 2B, includes a pair of evaporator headers 1 through which fluid such as coolant or cooling water is circulated and supplied, tubes 2 that connect the evaporator headers 1 and guide the fluid in a zigzag pattern for heat exchange with air, and heat-dissipating fins 3 that are disposed among the tubes 2 to increase a heat exchange area.

For the heat exchanger, common automotive air-conditioning units are formed to receive a rectangular evaporator or heater core, so, as shown in FIGS. 2A and 2B, heat exchangers are generally formed in a laterally long rectangular shape.

The heat exchanger formed in a rectangular shape has a larger heat transfer area W2 when the evaporator headers 1 are vertically arranged, as in FIG. 2B, than a heat exchange area W1 when the evaporator headers 1 are horizontally arranged, as in FIG. 2A.

This is because the portions where the tubes 2 are arranged provide the entire heat exchange area in the heat exchanger, so the smaller the area of the evaporator headers 1 occupy, the larger the heat transfer area.

That is, the longer the evaporator headers 1 extend horizontally, the smaller the heat transfer area for heat exchange provided by the tubes 2.

Accordingly, when the heat exchanger is formed in a rectangular shape and the tubes 2 are horizontally arranged, the maximum heat transfer area is provided.

The evaporator circulates a coolant at lower temperature through the tubes 2 to exchange heat with air, so the air condensates into water on the surfaces of the tubes 2 or the heat-dissipating fins 3.

Accordingly, existing evaporators have a limit that the tubes 2 have to be vertically arranged, as shown in FIG. 2A, thereby making it impossible to increase the heat transfer area.

That is, since the tubes 2 and the heat-dissipating fins 3 are vertically arranged in the evaporator, the condensate water produced on the surfaces of the tubes 2 is dropped and removed in the longitudinal direction of the tubes 2. However, when the tubes 2 are horizontally arranged, condensate water is not removed but is scattered with cold air by the force generated by the fan, so the tubes 2 should be vertically arranged.

### Documents of Related Art

(Patent Document 1) Korean Patent Application Publication No. 10-2014-0114191

### SUMMARY OF THE INVENTION

The present invention has been made in an effort to solve the problems and an object of the present invention is to provide an integrated module of an evaporator core and a heater core for an automotive air conditioner whereby the integrated module can simplify an automotive air conditioner by integrating an evaporator for cooling and a heater core for heating.

Another object of the present invention is to provide an integrated module of an evaporator core and a heater core for an automotive air conditioner whereby the integrated module can maximize a heat transfer area by being formed in a rectangular shape having a large aspect ratio with headers vertically arranged and that can prevent scattering of condensate water due to a fan even if tubes are horizontally arranged.

In order to achieve the above object, according to one aspect of the present invention, there is provided an integrated module of an evaporator core and a heater core for an automotive air conditioner, the integrated module being a heat exchanger disposed in the automotive air conditioner and providing cold air or hot air through heat exchange with air supplied by a fan. The integrated module includes: evaporator headers arranged to face each other and make a set in pairs with a gap therebtween, receiving a coolant supplied in a cooling cycle of a vehicle through a first side, providing a circulation path of the coolant, and discharging the coolant that has exchanged heat; evaporator tubes laterally arranged between the pair of evaporator headers to communicate with the evaporator headers, connected to each other with a regular interval in a longitudinal direction of the evaporator headers, and allowing a coolant flowing inside through the first side of the evaporator headers to cool air using heat of vaporization while flowing in a zigzag pattern through a second side of the evaporator headers; heater headers arranged to make a set in pairs in the same way as the evaporator headers to receive cooling water from an engine of the vehicle through a first side, provides a circulation channel for the cooling water, and discharges the cooling water that has exchanged heat; heater tubes laterally arranged between the pair of heater headers to communicate with the heater headers, connected to each other with a regular interval in a longitudinal direction of the heater headers, allowing cooling water flowing inside through the first side of the heater headers to heat air using heat of the cooling water while flowing in a zigzag pattern through a second side of the heater headers, and arranged in parallel with the evaporator tubes with the same gap as the evaporator tubes; and heat-dissipating fins disposed in spaces among the heater tubes and the evaporator tubes in contact with the tubes and dissipating heat from the heater tubes or the evaporator tubes while passing air supplied from the fan, in which the evaporator headers and the heater headers may have the same lengths at the first side and the second side, respectively, and may be stacked and fixed in an integrated unit.

The evaporator headers and the heater headers may be vertically arranged, the evaporator tubes and the heater tubes may be horizontally arranged, and the evaporator tubes and the heater tubes may be longer than the evaporator headers and the heater headers to form a rectangle.

The integrated module may further include a drain guide disposed close to the evaporator tubes or the heater tubes, opposite to the fan, and blocking and guiding down condensate water scattered away from the fan by force generated by the fan.

The drain guide may include: guide bodies vertically disposed at sides of the evaporator tubes or the heater tubes with regular intervals therebetween and providing channels for air passing by the heat-dissipating fins through spaces among the guide bodies; and baffle boards protruding on both sides of the guide bodies alternately in the spaces among the guide bodies, and collecting and dropping condensate water included in cold air under the guide bodies by alternately blocking the cold air flowing through the spaces.

According to the integrated module of an evaporator core and a heater core for an automotive air conditioner of the present invention, the evaporator headers and heater headers are stacked and fixed in an integrated unit, so it is possible to simplify the automotive air conditioner. Accordingly, installation is easy and a volume can be reduced, as compared with the related art, whereby it is possible to reduce the weight of a vehicle.

Further, according to the present invention, it is possible to maximize a heat transfer area for the same area of the entire evaporator by horizontally arranging tubes. In addition, the guide bodies of the drain guide provide channels for cold air and the baffle boards collect and drop condensate water included in cold air by blocking the cold air, so it is possible to prevent scattering of condensate water even if tubes are horizontally arranged.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view showing the configuration of an automotive air-conditioning system of the related art;
FIGS. 2A and 2B are front views showing a rectangular shape of a heat exchanger;
FIG. 3 is an entire perspective view showing an automotive integrated heat exchanger according to the present invention;
FIG. 4 is an enlarged perspective view showing the configuration of the integrated heat exchanger shown in FIG. 3;
FIG. 5 is a vertical cross-sectional view showing the configuration of heat-dissipating fins of the present invention;
FIG. 6 is a perspective view showing a drain guide of the present invention; and
FIG. 7 is a plan view showing the drain guide shown in FIG. 6.

### DETAILED DESCRIPTION OF THE INVENTION

Exemplary embodiments of the present invention will be described more fully hereinafter with reference to the accompanying drawings. In the following description of the present invention, detailed descriptions of known functions and components incorporated herein will be omitted.

Embodiments of the present invention may be changed and modified in various ways, so that specific embodiments are shown in the drawings as examples and will be described in detail in this specification or application. However, it should be understood that embodiments according to spirit of the present invention are not limited to the specific embodiments, but include all modifications, equivalents, and substitutions included in the spirit and the scope of the present invention.

It should be understood that when one element is referred to as being "connected to" or "coupled to" another element, it may be connected directly to or coupled directly to another element or be connected to or coupled to another element, having the other element intervening therebetween. On the other hand, it is to be understood that when one element is referred to as being "connected directly to" or "coupled directly to" another element, it may be connected to or coupled to another element without the other element intervening therebetween. Other expressions describing the relationships of components, that is, "between" and "directly between", or "close to" and "directly close to" should be understood in the same way.

Terms used in the present specification are used only in order to describe specific exemplary embodiments rather than limiting the present invention. As used herein, the singular forms are intended to include the plural forms as well, unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

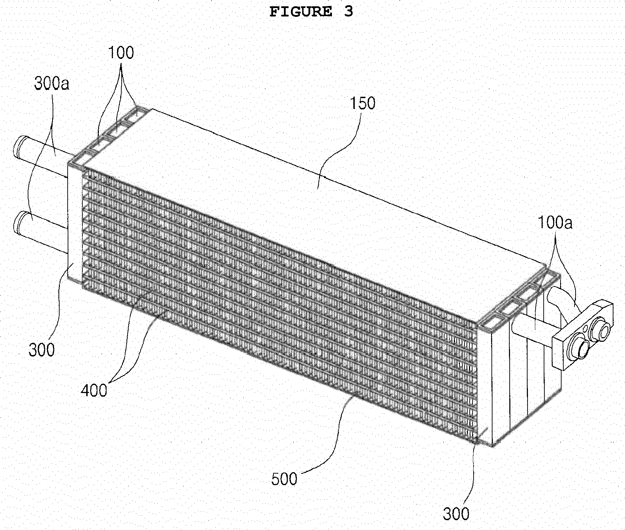

An integrated module of an evaporator core and a heater core for an automotive air-conditioning system according to the present invention, as shown in FIG. 3, may include evaporator headers 100, evaporator tubes 200, heater headers 300, heater tubes 400, and heat-dissipating fins 500.

The evaporator headers 100, which are parts for providing circulation paths of a coolant for cooling, are connected to an automotive cooling cycle (not shown), so a coolant at low temperature and low pressure flows into the evaporator headers 100 and is then discharged after exchanging heat with air supplied by a fan.

That is, the evaporator headers 100 are pipes and arranged to face each other in pairs with a gap therebetween, as shown in FIG. 3, and a coolant of the cooling cycle flows inside through a first side, moves to a second side through the evaporator tubes 200 to be described below, exchanges heat with air, and is then discharged to the cooling cycle.

The evaporator headers 100, as shown in FIG. 3, have entrances 100a for a coolant at a side.

The evaporator headers 100 may be stacked in a plurality of sets, depending on capacity, and have a separator therein by which the coolant flows to the second side through the separators.

Further, the evaporator headers 100 may be formed such that the number of tubes 200 through which the coolant flowing inside flows to the second side is gradually increased when the coolant is circulated.

For example, the evaporator headers 100 may be formed such that a coolant flowing to the first side flows to the second side through two tubes 200, returns to the first side through three tubes 200, and then flows back to the second side through four tubes 200.

This is for inducting a smooth phase change of the coolant by gradually increasing the heat exchange area of the coolant.

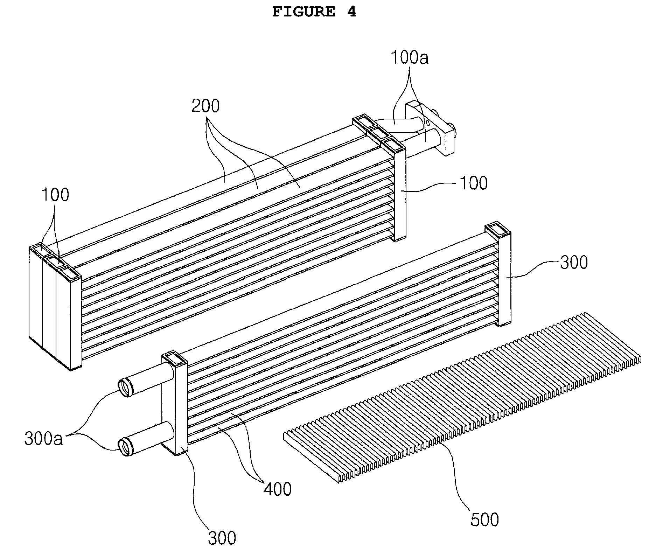

The evaporator tubes 200 are laterally arranged between the pair of evaporator headers 100 to communicate with the evaporator headers 100, as shown in FIG. 4, in order that the coolant flows in a zigzag pattern and cools the air supplied by the fan by exchanging heat with the air.

The number of the evaporator tubes 200 may be changed in accordance with evaporation load, and as shown in FIG. 3, the top may be covered and protected by a reinforcing plate 150.

The heater headers 300, which are parts for providing circulation paths of cooling water of an engine for heating, are connected to an engine (not shown), so cooling water heated by the engine flows into the heater headers 300 and is then discharged after exchanging heat with air supplied by a fan

That is, the heater headers 300 are, as shown in FIG. 3, similar to the evaporator headers 100, formed in pairs such that the pair makes a set, and cooling water flows inside through a first side, moves to a second side through the heater tubes 400 to be described below, exchanges heat with air, and is then discharged to the cooling cycle.

The heater headers 300, as shown in FIG. 3, have entrances 300a for cooling water at a side and have a separator therein to allow cooling water to flow to another side.

The heater headers 300, as shown in FIG. 3, may be formed in a single set, or may be stacked in a plurality of sets, depending on the capacity.

The entrances 300a of the heater headers 300 and the entrances 100a of the evaporator headers 100, as shown in FIG. 4, may be formed at opposite sides to minimize thermal interference, or may be formed at the same side, depending on the installation environment.

The heater headers 300, as shown in FIG. 3, have the same length as the evaporator headers 100 described above, so the heater headers 300 are stacked on the evaporator headers 100 in a single unit, thereby making an integrated module.

That is, the heater headers 300 are integrated with the evaporator headers 400 and provide individual fluid circulation channels, thereby reducing the volume of existing facilities.

For example, the heater headers 300 and the evaporator headers 100, as shown in FIG. 4, may be separately manufactured and then stacked and welded or coupled by fasteners into an integrated unit, or may be may be stacked in an integrated unit.

The heater tubes 400 are laterally arranged between the pair of heater headers 100 to communicate with the header pipes 100, as show in FIG. 4, in order that the cooling water flows in a zigzag pattern and heats the air supplied by the fan using the heat of the cooling water by exchanging heat with the air.

The heat-dissipating fins 500, as shown in FIG. 3, are disposed among the evaporator tubes 200 and the heater tubes 400 in contact with them and transmit heat of the evaporator tubes 200 or heat of the heater tubes 400 to air.

The heat-dissipating fins 500, as shown in FIG. 4, may be continuously formed in the shape of waves, or may be formed in other shapes known in the art, for example, in a zigzag pattern.

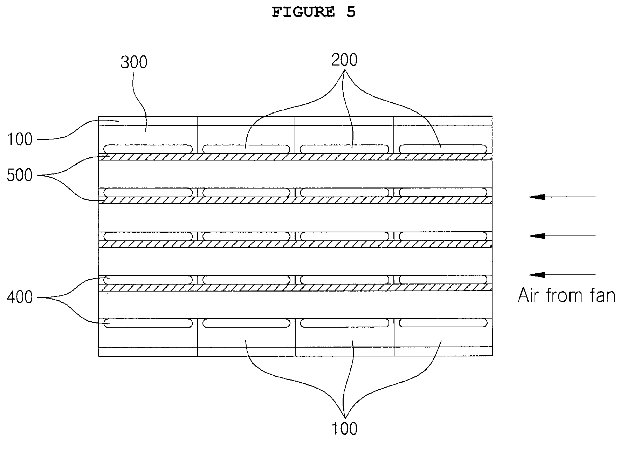

The heat-dissipating fins 500, as shown in FIGS. 4 and 5, may extend from the spaces among the evaporator tubes 200 to the spaces among the heater tubes 400, in an integrated unit.

That is, the heat-dissipating fins 500, as shown in FIG. 5, are formed in an integrated unit having a length corresponding to the widths of the evaporator header 100 and the heater headers 300 and can extend from the spaces among the evaporator tubes 200 to the spaces among the heater tubes 400. Accordingly, the heat-dissipating fins 500 can increase the contact area with air for transmitting heat from the heater tubes 400 or cold from the evaporator tubes 200 and transmit cold or heat through a larger area, so the performance of cooling/heating of an air conditioner can be improved.

Further, the integrated module of an evaporator core and a heater core for an automotive air conditioner of the present invention, as shown in FIGS. 3 and 4, may be formed in a structure in which the evaporator tubes 200 and the heater tubes 400 are horizontally arranged and the evaporator headers 100 and the heater headers 300 are vertically arranged. Further, the integrated module can be formed in a rectangular structure having a width larger than a height.

Accordingly, the heat exchanger of the present invention can have a large heat transfer area, as compared with the case with the tubes 200 and 400 vertically arranged, as described above with reference to FIGS. 2A and 2B.

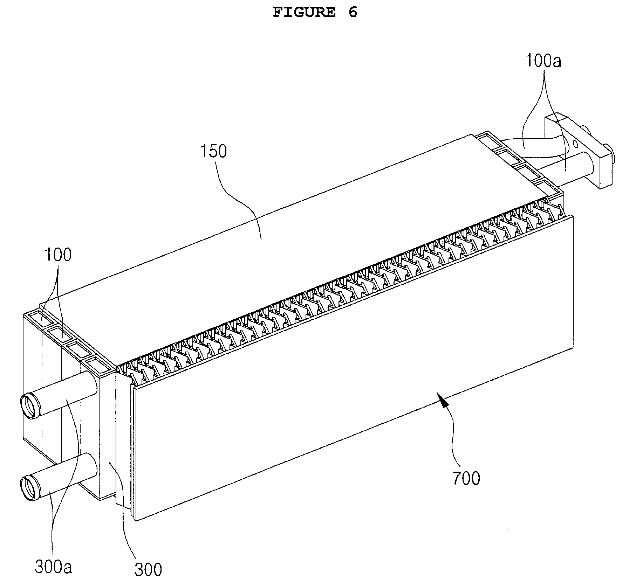

Further, the present invention may further include, as shown in FIG. 6, a drain guide 700.

The drain guide 700 is a part for preventing condensate water produced on the surfaces of the evaporator tubes 200 by heat of vaporization of the coolant from being scattered by force from the fan.

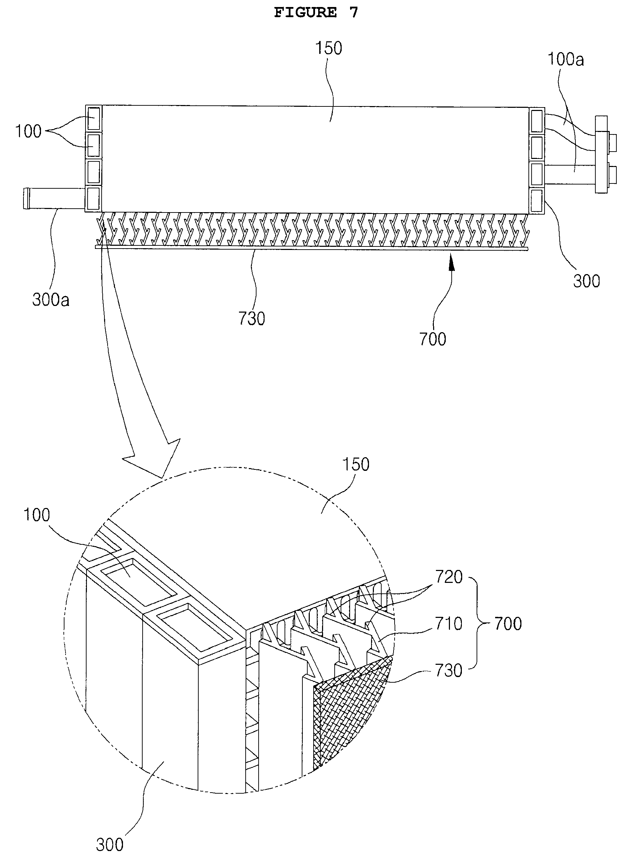

That is, the drain guide 700 is disposed opposite to the fan and is disposed close to the heater headers 300 and the heater tubes 400, as shown in FIGS. 6 and 7, or disposed close to the evaporator headers 100 and the evaporator tubes 200, unlike the figures. Further, the drain guide 700 provides channels for cold air and prevents condensate water from being discharged with the cold air by collecting and dropping the condensate water discharged with the cold air.

The drain guide 700, as shown in FIGS. 6 and 7, may include guide bodies 710 and baffle boards 720.

The guide bodies 710, as shown in FIG. 7, are formed in a plate shape and vertically disposed at sides of the tubes 200 with regular intervals, thereby providing channels, which are the spaces among them, for cold air.

The guide bodies 710 may be fixed to the reinforcing plate 150 for protecting the tubes 200 and 400 by fixing members (not shown).

The fixing members for fixing the guide bodies 710 may be brackets or bolts (not shown), and the guide bodies 710 may be coupled in a hook type or a clamp type.

The guide bodies 710, as shown in FIG. 7, each have bending portions in a zigzag pattern with inclined surfaces, so they can change the flow direction of cold air in a zigzag pattern.

Obviously, the guide bodies 710 may be formed in the shape of a flat plate without the bending portions.

The baffle boards 720 are parts that block cold air discharged through the channels formed by the guide bodies 710 and collect and drop condensate water in the cold air.

The baffle boards 720, as shown in FIG. 7, protrude on both sides of the guide bodies 710 alternately in the spaces among the guide bodies 710, thereby alternately blocking the cold air flowing through the spaces and separating condensate water from the cold air.

That is, the air supplied from the fan is cooled by exchanging heat with a coolant while passing through the evaporator tubes 200 and the heat-dissipating fins 500, and is discharged with the condensate water produced in the surfaces of the evaporator tubes 200 or the heat-dissipating fins 500 through the spaces among the guide bodies 710. The condensate water that is discharged with the cold air is separated from the cold air by hitting against the baffle boards 720 protruding in the spaces, and is then dropped along the baffle boards 720 and discharged to a specific drain.

Further, the baffle boards 720, as shown in FIG. 7, may protrude at the bending portions of the guide bodies 710 and may protrude at the same angle as the inclined surfaces of the guide bodies 710 at the bending portions.

Therefore, according to the present invention, water can be collected and dropped by the guide bodies 710 and the baffle boards 720 without scattering even through the tubes 200 are horizontally arranged, so the tubes 200 and 400 can be horizontally arranged. Accordingly, the heat transfer area can be increased, as compared with evaporators having the same size and capacity.

The drain guide 700 of the present invention, as shown in FIG. 7, may further include a condensate water filter 730.

The condensate water filter 730, as shown in the figures, is coupled to the exit ends of thee guide bodies 710 and covers the spaces among the guide bodies 710, that is, the channels for cold air, thereby filtering the condensate water remaining in the cold air.

That is, the condensate water filter 730 prevents condensate water from scattering by filtering the condensate water that is discharged through the spaces among the guide bodies 710 without being separated by the baffle boards 720.

As described above, according to the automotive integrated heat exchanger of the present invention, the evaporator headers 100 and the heater headers 300 are stacked and fixed in a single unit, it is possible to simplify the automotive air conditioner. Therefore, it is possible to more easily install the heat exchanger and reduce the volume, whereby it is possible to reduce the weight of a vehicle.

The present invention was described with reference to the exemplary embodiments, but those are provided only for explanation and are not intended to limit the scope of the present invention. It will be understood to those skilled in the art that the present invention may be replaced, changed, and modified in various ways without departing from the spirit of the present invention.

## Claims

1. An integrated module of an evaporator core and a heater core for an automotive air conditioner whereby the integrated module is a heat exchanger disposed in the automotive air conditioner and providing cold air or hot air through heat exchange with air supplied by a fan, the integrated module comprising:
evaporator headers arranged to face each other and make a set in pairs with a gap therebtween, receiving a coolant supplied in a cooling cycle of a vehicle through a first side, providing a circulation path of the coolant, and discharging the coolant that has exchanged heat;
evaporator tubes laterally arranged between the pair of evaporator headers to communicate with the evaporator headers, connected to each other with a regular interval in a longitudinal direction of the evaporator headers, and allowing a coolant flowing inside through the first side of the evaporator headers to cool air using heat of vaporization while flowing in a zigzag pattern through a second side of the evaporator headers;
heater headers arranged to make a set in pairs in the same way as the evaporator headers to receive cooling water from an engine of the vehicle through a first side, provides a circulation channel for the cooling water, and discharges the cooling water that has exchanged heat;
heater tubes laterally arranged between the pair of heater headers to communicate with the heater headers, connected to each other with a regular interval in a longitudinal direction of the heater headers, allowing cooling water flowing inside through the first side of the heater headers to heat air using heat of the cooling water while flowing in a zigzag pattern through a second side of the heater headers, and arranged in parallel with the evaporator tubes with the same gap as the evaporator tubes; and
heat-dissipating fins disposed in spaces among the heater tubes and the evaporator tubes in contact with the tubes and dissipating heat from the heater tubes or the evaporator tubes while passing air supplied from the fan,
wherein the evaporator headers and the heater headers have the same lengths at the first side and the second side, respectively, and are stacked and fixed in an integrated unit.

2. The integrated module of claim 1, wherein, in the heat exchanger, the evaporator headers and the heater headers are vertically arranged, the evaporator tubes and the heater tubes are horizontally arranged, and the evaporator tubes and the heater tubes are longer than the evaporator headers and the heater headers to form a rectangle.

3. The integrated module of claim 1, wherein, the heat exchanger further includes a drain guide disposed close to the evaporator tubes or the heater tubes, opposite to the fan, and blocking and guiding down condensate water scattered away from the fan by force generated by the fan.

4. The integrated module of claim 3, wherein the drain guide includes:
guide bodies vertically disposed at sides of the evaporator tubes or the heater tubes with regular intervals therebetween and providing channels for air passing by the heat-dissipating fins through spaces among the guide bodies; and
baffle boards protruding on both sides of the guide bodies alternately in the spaces among the guide bodies, and collecting and dropping condensate water included in cold air under the guide bodies by alternately blocking the cold air flowing through the spaces.
